# EUROPÄISCHE PATENTSCHRIFT

(11) **EP 1 693 495 B1**
(45) Veröffentlichungstag und Bekanntmachung des Hinweises auf die Patenterteilung: **23.11.2011**
(21) Anmeldenummer: 06002995.6
(22) Anmeldetag: 15.02.2006
(51) Int. Cl.: D03D 1/02, B60R 21/235

(54) **Airbaggewebe**
Airbag fabric
Tissu pour airbag

(30) Priorität: 21.02.2005 DE 202005002863 U
(43) Veröffentlichungstag der Anmeldung: 23.08.2006
(73) Patentinhaber: Cordenka GmbH, 63784 Obernburg (DE)
(72) Erfinder: Eule, Andreas, 53797 Lohmar (DE); Uihlein, Kurt, 63920 Grossheubach (DE)
(74) Vertreter: Oberlein, Gerriet H. R.

(56) Entgegenhaltungen:
- EP-A1- 0 616 061
- EP-A1- 0 795 052
- EP-A1- 0 797 694
- US-A- 5 865 464

## Beschreibung

### Die Erfindung betrifft ein Airbaggewebe.

Airbaggewebe sowie Garne zu deren Herstellung sind beispielsweise aus der EP 0 616 061 bekannt. Danach werden die für Airbaggewebe einzusetzenden Multifilamente nach dem Schmelzspinnverfahren hergestellt. Diese Verfahren sind in der Chemiefaserindustrie bekannt. Als Polymere kommen besonders Polyester, Polyamid 6.6, Polyamid 6, Polyamid 4.6, Polypropylen und Polyethylen zum Einsatz. Aber auch andere schmelzspinnbare Polymere sind dafür geeignet. Als Polymere werden Polyamid 6.6, Polyamid 4.6 und Polyester bevorzugt.

Gewebe für die Herstellung von Airbags müssen eine Reihe sehr unterschiedlicher Bedingungen erfüllen. Neben der besonders wichtigen, gezielt eingestellten Luftdurchlässigkeit, müssen diese Gewebe eine gute Alterungsbeständigkeit, eine hohe Festigkeit, eine gute Faltbarkeit und einen hohen Grad an Flexibilität beim Auslösen des Airbags im Falle eines Aufpralls aufweisen. Entsprechend den besonderen Forderungen an die Eigenschaften der Gewebe werden auch sehr spezifische Forderungen an die hierfür einzusetzenden Garne gestellt. Diese beziehen sich einmal auf deren Auswirkungen auf die Gewebeeigenschaften, zum anderen auf deren Verarbeitungsverhalten bei der Gewebeherstellung.

In der Praxis hat es sich als schwierig erwiesen, alle Forderungen in der besonders von den Automobilherstellern gewünschten Weise zu erfüllen.

So wurden die ersten Airbags bevorzugt aus beschichteten Geweben hergestellt. Diese haben sich nicht nur wegen der Herstellungskosten, sondern auch wegen einiger Nachteile beim Gebrauch als nicht besonders günstig erwiesen.

Die nach dem vermehrten Aufkommen unbeschichteter Airbaggewebe zunächst eingesetzten Garne hatten meist relativ hohe Garn- und Filamenttiter. Hiermit konnten zwar in den meisten Fällen die geforderten Luftdurchlässigkeiten und Festigkeiten erzielt werden, bezüglich der Faltbarkeit und der Flexibilität befriedigten diese Gewebe jedoch häufig nicht.

Airbags bestehen normalerweise aus einem Kontakt- und einem Filterteil, was in den meisten Fällen durch Vernähen von Geweben mit unterschiedlichen Luftdurchlässigkeiten realisiert wird. Daneben existieren auch einstückig gewebte Airbags mit Gewebepartien mit unterschiedlichen Luftdurchlässigkeiten sowie Airbags aus einer Gewebepartie mit Luftaustrittsöffnungen auf der Airbagrückseite.

Der Kontaktteil des Airbags ist der Teil, gegen den beim Auslösen der Airbagfunktion das von einem Generator erzeugte Gas strömt. Dieser Teil ist dem Fahrzeuginsassen benachbart. Hierfür wird eine niedrige Luftdurchlässigkeit von üblicherweise < 20 l/dm²·min, bevorzugt < 10 l/dm²·min (gemessen bei 500 Pa Prüfdifferenzdruck) gefordert.

Um ein weiches Auffangen des Fahrzeuginsassen im Falle eines Unfalls zu gewährleisten, muss dem in den Airbag einströmenden Gas die Möglichkeit eines partiellen Entweichens gegeben werden. Dies wird durch den rückseitigen Filterteil oder beim Beifahrer-Airbag durch die Seitenteile des Airbags erreicht. Für den Filterteil werden, je nach Fahrzeugtyp, Luftdurchlässigkeiten zwischen 20 und 100 l/dm²·min (gemessen bei 500 Pa Prüfdifferenzdruck) benötigt. Dieser Teil des Airbags hat darüber hinaus die Aufgabe, heiße Partikel aus dem Generatorgas zurückzuhalten, also vor dem Austreten des Gases in den Fahrgastraum auszufiltern.

Obwohl diese Anforderungen durch die Airbaggewebe des Standes der Technik bereits weitgehend erfüllt zu sein scheinen, so bleibt doch auch noch Raum für Verbesserungen.

So nimmt zum einen der Bedarf an Airbags in Fahrzeugen aller Art seit Jahren drastisch zu. Neben den früher üblichen Fahrer- und Beifahrerairbags sind heutzutage sogenannte Sidecurtains und auch Airbags für Passagiere im Fonds selbstverständlich. Neuerdings werden auch Luftsäcke für den Kniebereich getestet. Ein Ende des Bedarfs und der Einsatzmöglichkeiten ist noch gar nicht abzusehen. Entsprechend hoch ist natürlich der Materialaufwand für die Herstellung.

Zum anderen ist die Gesetzgebung hinsichtlich der Rücknahme und Wiederverwertung von beispielsweise alten Kraftfahrzeugen ebenfalls in den letzten Jahren aus Umweltgründen deutlich strenger geworden.

Es besteht daher ein Bedarf an Airbaggeweben, die zugleich die hohen Anforderungen hinsichtlich Funktionalität, stetig steigenden Bedarfs und gesetzlicher Bestimmungen bezüglich der Umweltauflagen erfüllen.

Zur Lösung dieses Anforderungsprofils wird vorgeschlagen, ein Airbaggewebe einzusetzen, welches zu mehr als 80 Gewichtsprozent (Gew.-%), bevorzugt zu 100 Gew.-% aus Garnen aus cellulosischen Multifilamenten besteht, die aus einer Lösung von Cellulose in einem tertiären Amin-N-oxid und gegebenenfalls Wasser erhalten worden sind.

Derartige Multifilamente und deren Herstellung sind dem Fachmann zum Beispiel aus der EP 0 795 052 und der EP 0 797 694 bekannt. Die cellulosischen Filamente werden z.B. hergestellt, indem eine Lösung aus Cellulose in dem tertiären Amin-N-oxid, wie dem N-Methylmorpholinoxid (NMMO) und gegebenenfalls Wasser, der Gallussäurepropylester als Stabilisator zugesetzt war, durch eine Spinndüsenplatte mit der entsprechenden Anzahl an Düsenbohrungen extrudiert wird. Die Temperatur der warmen Lösung liegt dabei typischerweise über 90° C.

Als Ausgangsmaterial eignet z.B. der Südkiefer-Zellstoff Ultranier-J(ITT-Rayonier) mit einem Polymerisationsgrad (DP) von ca. 1360.

Nach Verlassen der Spinndüse werden die Filamente in einem Luftspalt mit Luft angeblasen und dabei gekühlt. Die so erhaltenen cellulosischen Multifilamente werden in einem wässrigen Fällbad gefällt und durch eine Waschstrecke geleitet, um NMMO zu entfernen. Die nach dem Waschen aufgetragene überschüssige Avivage wird z.B. durch Abquetschen zwischen zwei Rollen von den Filamenten abgestreift. Anschließend werden die Filamente getrocknet und aufgewickelt.

Die erfindungsgemäßen Airbaggewebe weisen Eigenschaften auf, die sie nicht nur ganz hervorragend geeignet machen für den Einsatz im Kontakt- und Filterteil der Luftsäcke, sondern sind darüber hinaus auch noch langzeitbeständig, gut faltbar und werden aus nachwachsenden Rohstoffen gewonnen.

Es wird bevorzugt, wenn die den Garnen zugrunde liegenden cellulosischen Multifilamente eine Reißfestigkeit von mindestens 50 cN/tex aufweisen.

Nach oben hin weisen die cellulosischen Multifilamente eine Reißfestigkeit von bis zu 100 cN/tex, bevorzugt bis zu 80 cN/tex, auf.

Die Bruchdehnung der cellulosischen Multifilamente liegt günstigerweise zwischen 6 und 25 %, noch bevorzugter von 6 bis 20%, insbesondere von 6 bis 13%.

Es ist weiterhin bevorzugt, wenn die das Airbaggewebe bildenden Garne einen Garntiter zwischen 100 und 1000 dtex, bevorzugt zwischen 200 und 500 dtex, aufweisen.

Die Einzelfilamenttiter der Multifilamente sollten dabei kleiner sein als 5 dtex. Bevorzugt wird ein Einzelfilamenttiter von 2,4 - 5 dtex, besonders bevorzugt von 3,4 - 5 dtex. Der niedrige Filamenttiter ist besonders für die Faltbarkeit des Airbaggewebes von Bedeutung.

Die Festigkeit und Dehnung werden anhand des Kraft-Dehnungs-Verhaltens an einzelnen Filamenten unter klimatisierten Bedingungen (T = (21°C), relative Feuchtigkeit (65 +/- 5%) mit dem Prüfgerät Fafegraph (Firma Textechno) bestimmt. Die Einspannlänge betrug 20 mm und die Prüfgeschwindigkeit 20 mm/min ausgehend von einer Vorspannung von 1 cN/tex.

Die Feinheitsmessungen werden mit dem Gerät Vibromat (Firma Textechno) an durchgeführt.

Selbstverständlich bezieht sich die vorliegende Erfindung auch auf einen Airbag, der ein Airbaggewebe wie oben beschrieben enthält.

## Patentansprüche

1. Airbaggewebe, **dadurch gekennzeichnet, dass** das Gewebe zu mehr als 80 Gew.-%, bevorzugt zu 100 Gew.-%, aus Garnen aus cellulosischen Multifilamenten besteht, die aus einer Lösung von Cellulose in einem tertiären Amin-N-oxid und gegebenenfalls Wasser erhalten worden sind.

2. Das Airbaggewebe gemäß Anspruch 1, **dadurch gekennzeichnet, dass** die cellulosischen Multifilamente eine Reißfestigkeit von mindestens 50 cN/tex aufweisen.

3. Das Airbaggewebe gemäß Anspruch 1 oder 2, **dadurch gekennzeichnet, dass** die cellulosischen Multifilamente eine Reißfestigkeit von bis zu 100, bevorzugt bis zu 80 cN/tex, aufweisen.

4. Das Airbaggewebe gemäß einem oder mehrerer der vorangehenden Ansprüche 1 bis 3, **dadurch gekennzeichnet, dass** die cellulosischen Multifilamente eine Bruchdehnung zwischen 6 und 25 % aufweisen.

5. Das Airbaggewebe gemäß einem oder mehrerer der vorangehenden Ansprüche 1 bis 4, **dadurch gekennzeichnet, dass** die Garne einen Garntiter zwischen 100 und 1000 dtex, bevorzugt zwischen 200 und 500 dtex, aufweisen.

6. Das Airbaggewebe gemäß einem oder mehrerer der vorangehenden Ansprüche 1 bis 5, **dadurch gekennzeichnet, dass** die Einzelfilamenttiter der Multifilamente kleiner sind als 5 dtex.

7. Airbag enthaltend ein Airbaggewebe gemäß einem oder mehreren der vorangehenden Ansprüche 1 bis 6.

## Claims

1. Airbag fabric, **characterized in that** the fabric comprises more than 80 wt.%, preferably 100 wt.%, of yarns made from cellulosic multifilaments which were produced from a solution of cellulose in a tertiary amine N-oxide and optionally water.

2. The airbag fabric according to Claim 1, **characterized in that** the cellulosic multifilaments have a breaking tenacity of at least 50 cN/tex.

3. The airbag fabric according to Claim 1 or 2, **characterized in that** the cellulosic multifilaments have a breaking tenacity of up to 100, preferably up to 80 cN/tex.

4. The airbag fabric according to one or more of the previous Claims 1 to 3, **characterized in that** the cellulosic multifilaments have an elongation at break between 6 and 25%.

5. The airbag fabric according to one or more of the previous Claims 1 to 4, **characterized in that** the yarns have a yarn count between 100 and 1000 dtex, preferably between 200 and 500 dtex.

6. The airbag fabric according to one or more of the previous Claims 1 to 5, **characterized in that** the individual-filament linear density of the multifilaments is lower than 5 dtex.

7. Airbag containing an airbag fabric according to one or more of the previous Claims 1 to 6.

## Revendications

1. Tissu pour airbag, **caractérisé en ce qu'**il est composé à plus de 80 %, de préférence à 100 % de fils en multifilaments cellulosiques, obtenus à partir d'une solution de cellulose dans un oxyde tertiaire N d'amine et éventuellement de l'eau.

2. Tissu pour airbag selon la revendication 1, **caractérisé en ce que** les multifilaments cellulosiques présentent une résistance à la déchirure d'au moins 50 cN/tex.

3. Tissu pour airbag selon la revendication 1 ou 2, **caractérisé en ce que** les multifilaments cellulosiques présentent une résistance à la déchirure allant jusqu'à 100, de préférence jusqu'à 80 cN/tex.

4. Tissu pour airbag selon une ou plusieurs des revendications précédentes, **caractérisé en ce que** les multifilaments cellulosiques présentent un allongement à la rupture compris entre 6 % et 25 %.

5. Tissu pour airbag selon une ou plusieurs des revendications précédentes, **caractérisé en ce que** les fils ont un titre compris entre 100 et 1000 dtex, de préférence entre 200 et 500 dtex.

6. Tissu pour airbag selon une ou plusieurs des revendications précédentes, **caractérisé en ce que** les titres de filaments individuels composant les multifilaments sont inférieurs à 5 dtex.

7. Airbag comprenant un tissu selon une ou plusieurs des revendications précédentes.
